# FASCICULE DE BREVET EUROPEEN

(11) **EP 3 233 714 B1**
(45) Date de publication et mention de la délivrance du brevet: **20.10.2021**
(21) Numéro de dépôt: 15820472.7
(22) Date de dépôt: 17.12.2015
(51) Int. Cl.: B66F 11/04, B60Q 1/32, B60Q 1/50, B66F 17/00

(54) **NACELLE ÉLÉVATRICE ET PROCÉDÉ DE MISE EN OEUVRE**
LUFTAUFZUG UND VERFAHREN ZUR IMPLEMENTIERUNG DAVON
AERIAL LIFT AND METHOD FOR IMPLEMENTING SAME

(30) Priorité: 18.12.2014 FR 1462823
(43) Date de publication de la demande: 25.10.2017
(73) Titulaire: Haulotte Group, 42420 Lorette (FR)
(72) Inventeur: LUMINET, Philippe, 69001 Lyon (FR); DITTUS, Sebastian, 69440 Mornant (FR)
(74) Mandataire: Lavoix
(86) Numéro de dépôt international: PCT/EP2015/080212
(87) Numéro de publication internationale: WO 2016/097139

(56) Documents cités:
- EP-A1- 2 374 635
- DE-A1- 2 924 820
- DE-A1-102012 024 494
- US-A1- 2012 025 964

## Description

La présente invention concerne une nacelle élévatrice. L'invention concerne également un procédé de mise en œuvre d'une telle nacelle élévatrice. Le domaine de l'invention est celui des nacelles élévatrices de personnel.

EP-A-2 374 635 décrit un exemple de nacelle élévatrice, comprenant un châssis motorisé muni de roues, une tourelle pivotant à 360 degrés sur le châssis, un bras élévateur articulé sur la tourelle, et une plate-forme mobile agencée à l'extrémité du bras élévateur.

La plateforme peut être équipée d'un phare de travail permettant à l'utilisateur d'éclairer la zone en hauteur où il effectue des travaux. Egalement, la nacelle peut être équipée d'un gyrophare, généralement placé sur la tourelle ou le châssis, permettant de signaler aux personnes à proximité que la machine est en cours d'utilisation.

Néanmoins, il n'est pas toujours possible de positionner le gyrophare de manière à ce que son faisceau lumineux soit perçu par les personnes à proximité, quelle que soit leur position. Ainsi, il existe un risque d'accident pour les personnes au sol. En outre, ces personnes ne sont pas en mesure de réagir au mieux à une situation d'urgence qui affecterait la nacelle et/ou son opérateur.

DE 29 24 820 A1, US-A-2012/0025964 et DE-A-10 2012 024 494 décrivent des systèmes de signalisation pour véhicules de travail permettant d'avertir des personnes d'un danger lié au passage du véhicule de travail.

Il est également connu d'activer un signal sonore en cas de déclenchement d'un dispositif de sécurité, comme par exemple un limiteur de charge équipant la plate-forme. Le niveau de danger lié à ce signal sonore est difficile à interpréter par une personne à proximité, en particulier dans un environnement de chantier ou d'industrie dans lequel les émissions sonores sont nombreuses et perturbantes, ce qui laisse subsister un doute sur les actions à accomplir par cette personne.

Le but de la présente invention est de remédier aux inconvénients ci-dessus.

A cet effet, l'invention a pour objet une nacelle élévatrice, comprenant : une partie basse équipée d'organes de liaison au sol ; une structure élévatrice ; une plate-forme portée par la structure élévatrice ; et un système d'éclairage comprenant au moins un dispositif d'éclairage agencé sur la partie basse ou sur la plate-forme, autre qu'un phare de conduite. La nacelle élévatrice est caractérisée en ce que le dispositif d'éclairage génère sélectivement des faisceaux lumineux colorés dont la couleur est sélectionnée parmi au moins deux couleurs distinctes, correspondant respectivement à :
- une situation d'arrêt de sécurité de la nacelle élévatrice;
- une situation d'accident en hauteur de la nacelle élévatrice.

Ainsi, l'invention permet d'avertir les personnes au sol autour de la nacelle des conditions de fonctionnement de cette nacelle, et en particulier des situations d'urgence. Les personnes au sol peuvent facilement reconnaître un changement des conditions de fonctionnement de la nacelle, et se comporter en conséquence. En comparaison avec un gyrophare classique, projetant une unique couleur, l'information adressée aux personnes au sol est plus détaillée et leur permet de mieux réagir aux différentes situations. L'invention permet donc de réduire les risques d'accidents, ce qui répond à un impératif de sécurité primordial. En outre, le système d'éclairage selon l'invention peut remplir des fonctions additionnelles avantageuses, comme cela ressortira de la description ci-après.

Selon d'autres caractéristiques avantageuses de l'invention, prises isolément ou en combinaison :
- Le dispositif d'éclairage génère sélectivement un faisceau rouge en situation d'arrêt de sécurité, et un faisceau bleu en situation d'accident en hauteur.
- Le dispositif d'éclairage génère également :
- un faisceau vert en situation de travail ;
- un faisceau orange en situation de panne.
- Le dispositif d'éclairage génère sélectivement des faisceaux lumineux colorés dirigés vers le sol et l'environnement proche de la nacelle élévatrice, incluant au moins en partie une zone comprise entre 0 et 1 mètre du bord des organes de liaison au sol.
- Les faisceaux lumineux colorés sont orientés dans un espace excluant la plateforme.
- Les faisceaux lumineux colorés projettent des marquages au sol délimitant une zone balisée autour de la nacelle élévatrice.
- Au moins l'un des marquages au sol comporte une forme figurative, par exemple un graphisme de danger.
- Le dispositif d'éclairage génère sélectivement des faisceaux lumineux colorés dirigés vers le sol et l'environnement proche de la nacelle élévatrice, à moins de dix mètres des organes de liaison au sol.
- Le dispositif d'éclairage éclaire au moins partiellement les organes de liaison au sol.
- Le système d'éclairage comprend différents dispositifs d'éclairages agencés sur la partie basse, sur la structure élévatrice et/ou sur la plate-forme, chacun générant sélectivement des faisceaux lumineux colorés dont la couleur est fonction des conditions de fonctionnement de la nacelle élévatrice.
- Le système d'éclairage comprend au moins un dispositif d'éclairage agencé sur un côté avant de la partie basse, notamment sur un côté avant d'une tourelle appartenant à la partie basse.
- Le système d'éclairage comprend au moins un dispositif d'éclairage agencé sur un côté latéral de la partie basse, notamment sur un côté latéral et le dessous d'une tourelle appartenant à la partie basse.
- Le système d'éclairage comprend au moins deux dispositifs d'éclairage agencés sur les côtés latéraux de la partie basse, un sur chaque côté.
- Le système d'éclairage comprend au moins un dispositif d'éclairage agencé sur un côté avant et le dessous de la plate-forme.
- Le système d'éclairage comprend au moins un dispositif d'éclairage agencé sur un côté latéral et le dessous de la plate-forme.
- Le système d'éclairage comprend au moins un dispositif d'éclairage agencé sur le dessous de la structure élévatrice.
- Le système d'éclairage comprend au moins un dispositif d'éclairage agencé sur un côté latéral, avant ou arrière de la structure élévatrice.
- Le système d'éclairage comprend au moins un dispositif d'éclairage agencé sur un côté avant de la partie basse, notamment sur un côté avant d'une tourelle appartenant à la partie basse ; au moins deux dispositifs d'éclairage agencés sur les côtés latéraux de la partie basse, notamment chacun sur un côté latéral et le dessous d'une tourelle appartenant à la partie basse ; et au moins un dispositif d'éclairage agencé sur la structure élévatrice et/ou sur la plate-forme.
- Les faisceaux lumineux générés par les dispositifs d'éclairage sont inclinés par rapport au sol selon des angles compris entre 20 degrés et 90 degrés inclus.

L'invention a également pour objet un procédé de mise en oeuvre d'une nacelle élévatrice telle que mentionnée ci-dessus. Le procédé est caractérisé en ce que lors d'un changement prédéterminé des conditions de fonctionnement de la nacelle élévatrice, en particulier lors d'un passage en situation de travail, en situation d'arrêt de sécurité, en situation de panne ou en situation d'accident en hauteur, le dispositif d'éclairage génère sélectivement des faisceaux lumineux colorés ayant une couleur prédéterminée.

L'invention sera mieux comprise à la lecture de la description qui va suivre, donnée uniquement à titre d'exemple non limitatif et faite en référence aux dessins annexés sur lesquels :
- la figure 1 est une vue en perspective d'une nacelle élévatrice conforme à l'invention ;
- la figure 2 est une vue de côté selon la flèche II à la figure 1 ;
- la figure 3 est une vue de dessus selon la flèche III à la figure 1 ;
- la figure 4 est une vue avant selon la flèche IV à la figure 1 ;
- la figure 5 est une vue en élévation du point de vue d'un opérateur positionné dans le panier de la nacelle, la nacelle étant représentée schématiquement dans un but de simplification ;
- la figure 6 est une autre représentation schématique de la nacelle, montrée en perspective ;
- la figure 7 est une représentation schématique d'un opérateur positionné dans le panier de la nacelle, en situation de travail ;
- la figure 9 est une représentation schématique de l'opérateur appuyant sur un bouton d'arrêt, en situation d'arrêt d'urgence ;
- la figure 11 est une représentation schématique de la nacelle, en situation de panne ;
- la figure 13 est une représentation schématique de l'opérateur positionné dans le panier de la nacelle, en situation d'accident ;

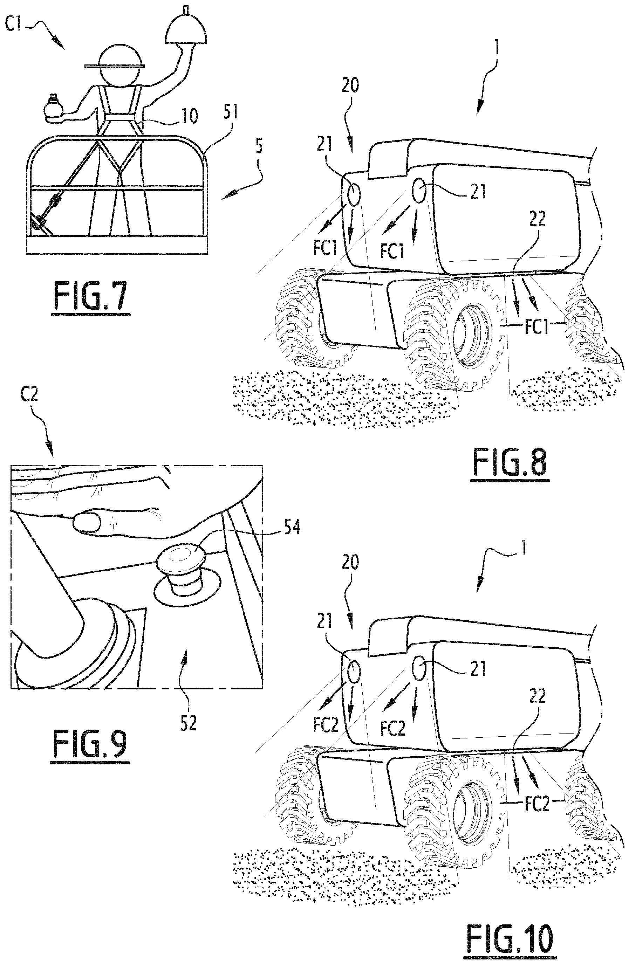

- les figures 8, 10, 12 et 14 sont des représentations schématiques partielles de la nacelle, correspondant respectivement aux situations des figures 7, 9, 11 et 13, avec des faisceaux lumineux de couleurs différentes ; et

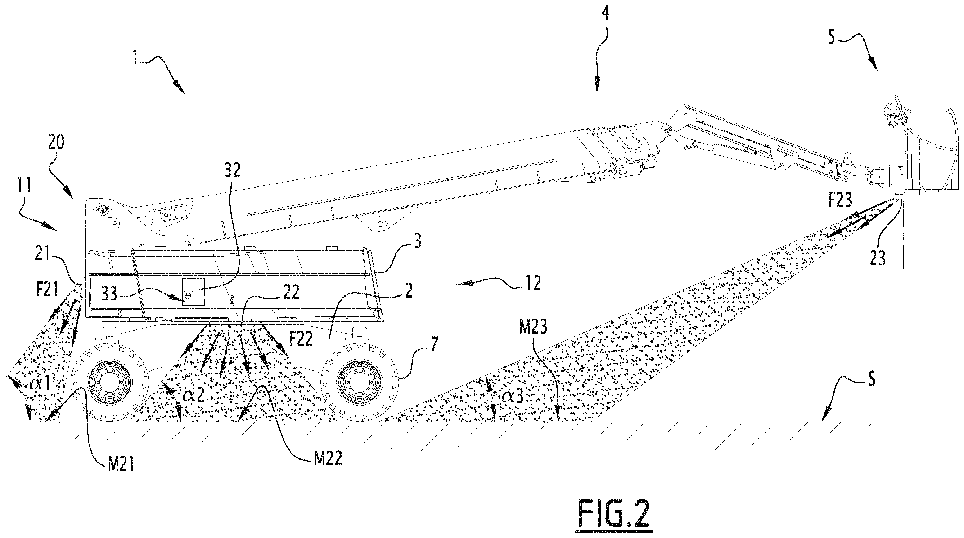

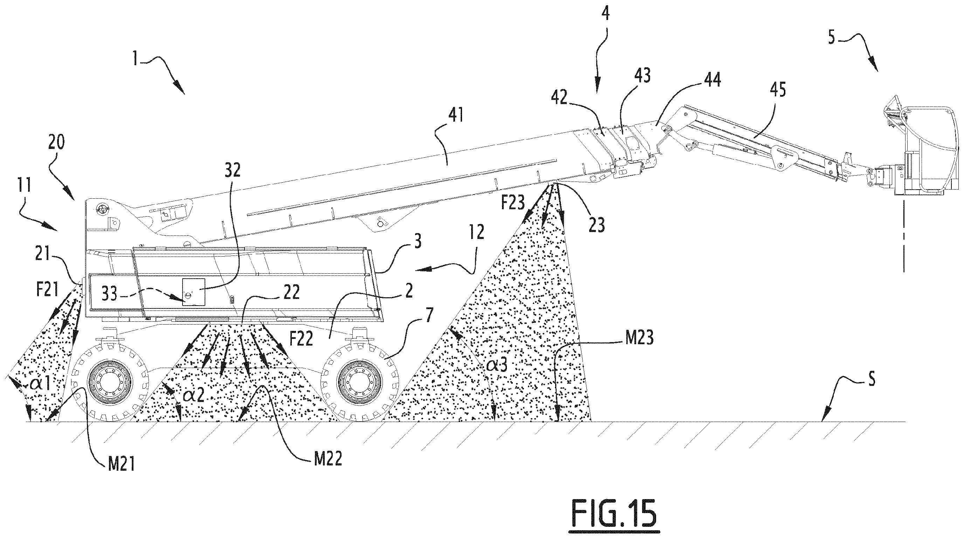

- la figure 15 est une vue analogue à la figure 2, montrant un deuxième mode de réalisation d'une nacelle conforme à l'invention.

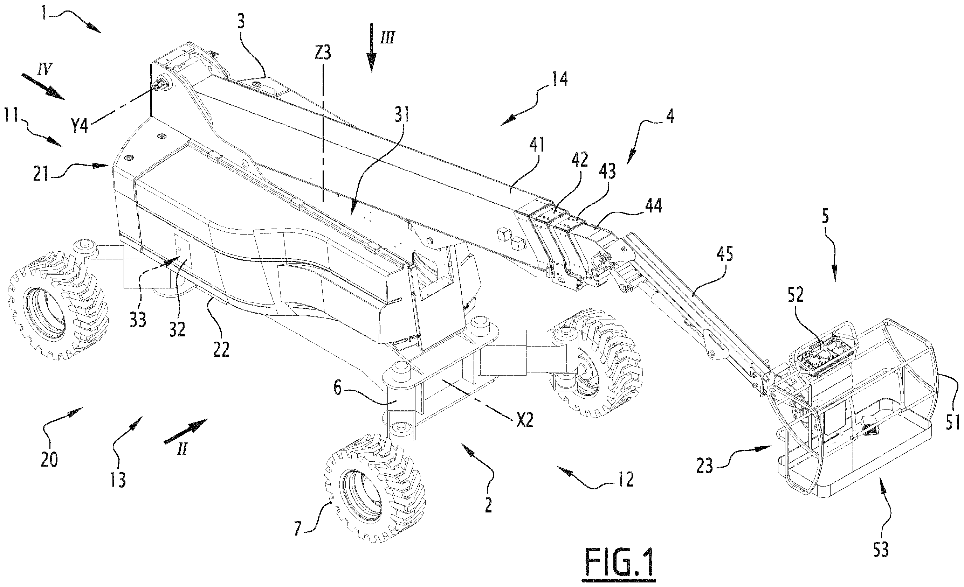

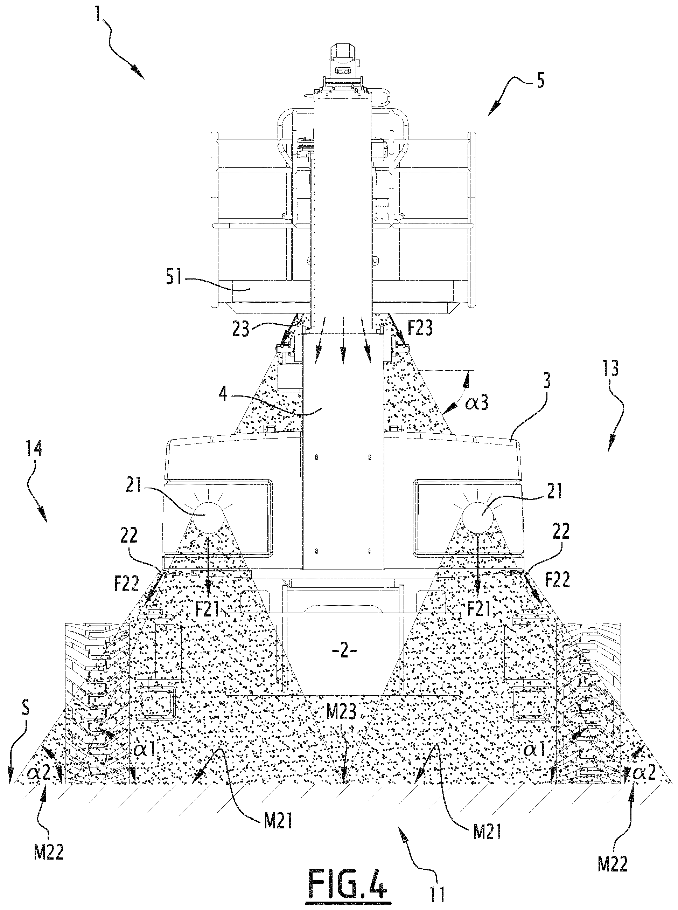

Sur les figures 1 à 14 est représentée une nacelle élévatrice 1 conforme à l'invention.

La nacelle 1 comprend un châssis roulant 2, une tourelle 3, un bras télescopique 4 et une plate-forme 5. Le châssis 2 et la tourelle 3 constituent la partie basse de la nacelle 1, tandis que le bras télescopique 4 constitue la structure élévatrice de la nacelle 1. La nacelle 1 présente un côté avant 11, un côté arrière 12, un côté gauche 13 et un côté droit 14. La nacelle 1 est prévue pour être pilotée par un opérateur 10 positionné sur la plateforme 5. L'opérateur 10 est représenté schématiquement, uniquement aux figures 7, 9 et 13, dans un but de simplification.

Le châssis 2 s'étend suivant un axe longitudinal X2. Le châssis 2 est pourvu d'essieux 6 supportant des roues 7, permettant à la nacelle 1 de se translater sur une surface au sol S. Les roues 7 forment des organes de liaison au sol S de la nacelle 1. Sur l'exemple des figures, les essieux 6 sont télescopiques et articulés en rotation sur le châssis 2. Néanmoins, en pratique, les essieux 6 peuvent présenter toute configuration adaptée à l'application visée. Notamment, les essieux 6 peuvent être des essieux droits, télescopiques ou non. Les moyens de motorisation du châssis 2, non représentés, peuvent comprendre un moteur à combustion interne ou un moteur électrique. Sur le châssis 2 peuvent également être montés une unité centrale de gestion électronique, un réservoir hydraulique, un réservoir de carburant, et/ou un ensemble de batteries électriques.

La tourelle 3 est montée sur le châssis 2, en étant mobile en rotation à 360 degrés autour d'un axe vertical Z3. De préférence, la tourelle 3 est actionnée par des moyens hydrauliques, non représentés. La tourelle 3 comporte un logement longitudinal 31 prévu pour recevoir le bras 4 en position de repos. La tourelle 3 comporte également un volet latéral 32 recouvrant de manière amovible un pupitre de commande 33.

Le bras télescopique 4 est monté sur la tourelle 3, en étant articulé en rotation autour d'un axe horizontal Y4. Le bras 4 comprend plusieurs caissons allongés 41, 42, 43 et 44, emboîtés les uns dans les autres. En variante, le bras 4 peut être un bras élévateur articulé ou de tout autre type connu. A l'extrémité 44 du bras 4 est agencée une structure à parallélogramme 45, supportant la plate-forme 5.

La plate-forme 5 est prévue pour recevoir une charge, notamment du personnel et de l'équipement. La plate-forme 5 comprend un panier 51 et une console de commande 52 disposé du côté avant 11 du panier 51. En déplacement sur le sol S, lorsque la tourelle 3 est orientée à 0 degrés, l'opérateur 10 de la nacelle 1 est positionné dans le panier 51 de la plate-forme 5 et regarde en direction du côté avant 11 de la nacelle 1. Le panier 51 est formé par différents montants verticaux et horizontaux. Le panier 51 est pourvu d'une porte d'accès 53 située du côté arrière 12.

La nacelle 1 est également équipée d'un système d'éclairage 20, permettant d'éclairer le sol S et l'environnement proche de la nacelle 1, à moins de dix mètres des roues 7. Comme les rayons lumineux projetés sont généralement diffus, on précise que le système d'éclairage 20 est prévu pour éclairer essentiellement à moins de cinq mètres des roues 7. Autrement dit, au moins 50% de l'intensité lumineuse projetée par le système d'éclairage 20 est concentrée à moins de cinq mètres des roues 7.

En particulier, le système d'éclairage 20 vise à éclairer au moins en partie une zone comprise entre 0 et 1 mètre du bord des roues 7, autour de la nacelle 1. En l'espèce, le bord des roues 7 désigne leur enveloppe externe, du côté opposé au châssis 2. De préférence, le système d'éclairage 20 éclaire au moins en partie les roues 7.

Ainsi, le système 20 permet d'améliorer la visibilité de l'opérateur 10 positionné sur la plate-forme 5 et de faciliter ses manœuvres, à la fois lors d'une opération de chargement ou de déchargement de la nacelle 1 ou lors d'une opération de manœuvre sur chantier. En outre, pendant le travail de l'opérateur 10 en hauteur, le système 20 permet d'avertir des personnes au sol S de l'intervention en cours, ou bien de les prévenir en cas d'urgence.

Le système d'éclairage 20 comprend plusieurs dispositifs d'éclairage 21, 22 et 23, disposés sur la tourelle 3 et la plate-forme 5. Sur l'exemple des figures, deux dispositifs 21 sont positionnés sur l'avant de la tourelle 3, deux dispositifs 22 sont positionnés sur les côtés et le dessous la tourelle 3, tandis qu'un dispositif 23 est positionné sur l'avant et le dessous de la plate-forme 5.

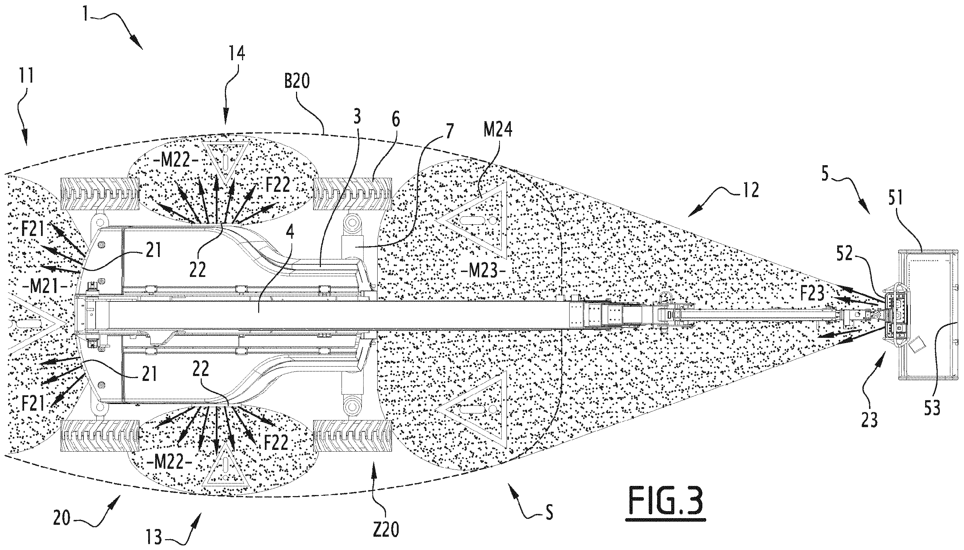

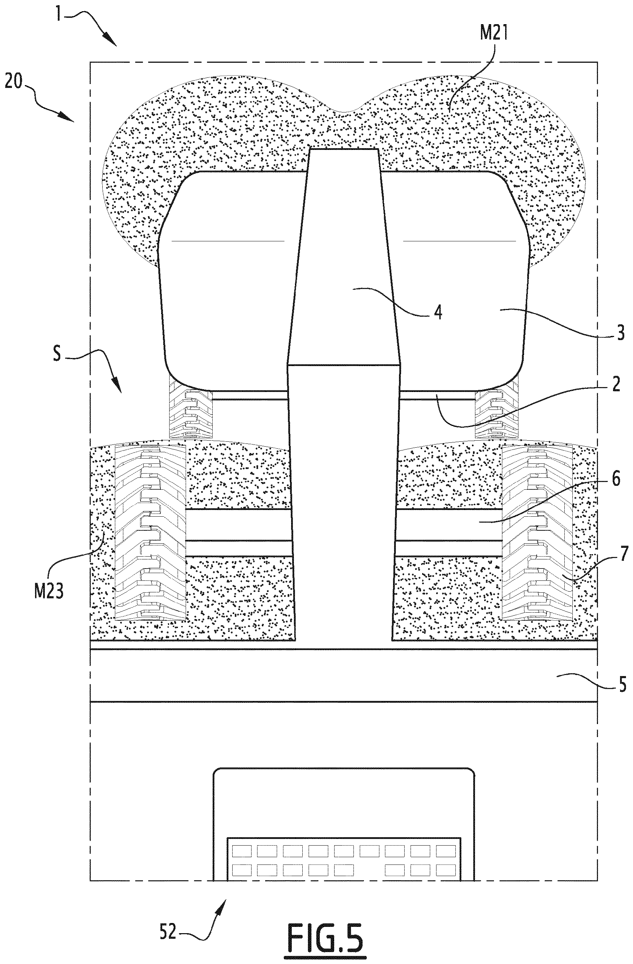

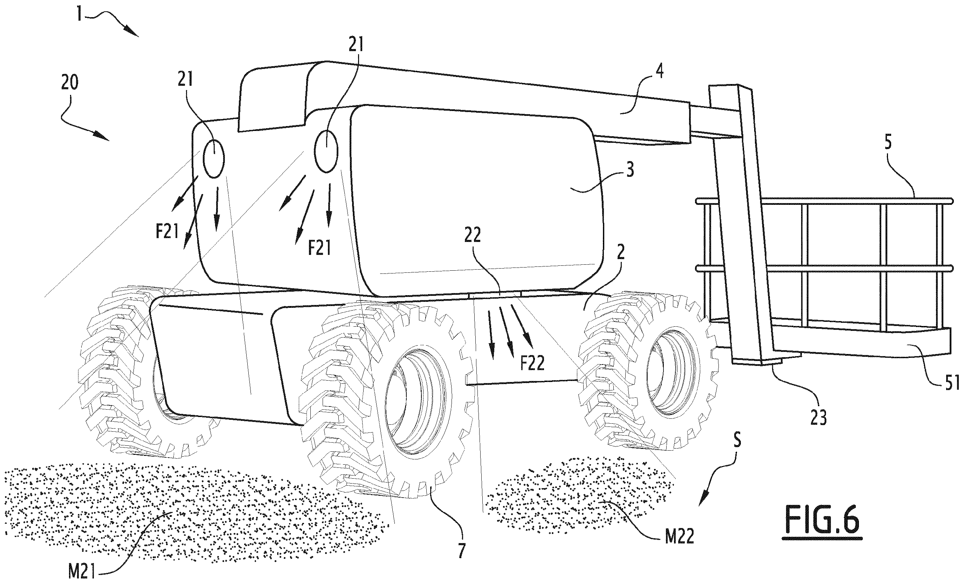

Comme montré aux figures 3 à 6, les dispositifs 21, 22 et 23 génèrent des faisceaux lumineux F21, F22 et F23 projetant des marquages M21, M22 et M23 au sol S. Sur les figures 2, 3 et 4, tous les dispositifs 21, 22 et 23 sont allumés. Sur la figure 5, les dispositifs 21 et 23 sont allumés, mais pas les dispositifs 22. Sur la figure 6, les dispositifs 21 et 22 sont allumés, mais pas le dispositif 23.

Les dispositifs 21, 22 et 23 sont configurés pour éclairer le sol S et l'environnement proche de la nacelle 1. Les faisceaux F21 sont dirigés globalement vers l'avant de la tourelle 3, de sorte que lorsque la tourelle 3 est en position droite par rapport au châssis 2, les marquages M21 sont situés du côté avant 11 de la nacelle 1. Les faisceaux F22 sont dirigés globalement sur les côtés de la tourelle 3, de sorte que lorsque la tourelle 3 est en position droite par rapport au châssis 2, les marquages M22 sont situés sur les côtés latéraux 13 et 14 de la nacelle 1. Les faisceaux F23 sont dirigés globalement vers l'avant de la plate-forme 5, de sorte que lorsque la tourelle 3 est en position droite par rapport au châssis 2, avec le mât 4 et la plate-forme 5 situés dans son prolongement du côté arrière, le marquage M23 est situé sur le côté arrière 12 de la nacelle 1.

Sur l'exemple des figures 2 et 3, les faisceaux lumineux F21, F22 et F23 sont inclinés par rapport au sol S selon des angles α1, α2 et α3 compris entre 20 et 90 degrés inclus. Plus précisément, comme montré aux figures 2 et 3, chaque dispositif 21, 22 et 23 génère des faisceaux lumineux F21, F22 et F23 inclinés par rapport au sol S selon un ensemble d'angles α1, α2 et α3 compris entre 20 et 90 degrés inclus, quelle que soit la direction considérée. En particulier, les angles α1 sont compris entre 50 et 75 degrés, les angles α2 sont compris entre 50 et 65 degrés, et les angles α3 sont compris entre 25 et 35 degrés. Pour une nacelle 1 roulant au maximum à 6 kilomètres / heure et freinant sur deux mètres, les faisceaux F21, F22 et F23 sont orientés pour éclairer à moins de cinq mètres du châssis 2. Plus précisément, les faisceaux F21, F22 et F23 sont orientés pour éclairer au moins en partie la zone comprise entre 0 et 1 mètre du bord des roues 7. Comme montré aux figures 2 et 3, les marquages M21, M22 et M23 au sol S recouvrent partiellement cette zone, mais pas intégralement. De préférence pour faciliter les manœuvres, les marquages M21, M22 et M23 s'étendent en partie en dessous et autour des roues 7.

Par comparaison avec le système d'éclairage 20 de l'invention, les faisceaux projetés par les phares de conduite équipant les véhicules automobiles sont prévus pour éclairer, en feux de croisement, au moins à trente mètres du châssis. Ainsi, ces phares de conduite sont généralement inclinés par rapport au sol S, en feux de croisement, selon des angles compris entre 3 et 15 degrés inclus. Les phares de conduite n'éclairent pas le sol S à proximité des roues.

De préférence, les dispositifs 21, 22 et 23 sont fixes, autrement dit l'orientation des faisceaux F21, F22 et F23 est fixe. En alternative, les dispositifs 21, 22 et 23 peuvent être configurés pour pouvoir orienter leurs faisceaux F21, F22 et F23. Autrement dit, les dispositifs 21, 22 et 23 peuvent projeter des faisceaux F21, F22 et F23 orientables. Dans ce cas, les angles α1, α2 et α3 sont réglables.

Comme montré notamment à la figure 3, les marquages M21, M22 et M23 sont projetés par le système d'éclairage 20 tout autour de la nacelle 1. Ainsi, les marquages M21, M22 et M23 délimitent une zone balisée Z20 autour de la nacelle 1, matérialisée par une barrière fictive B20 représentée en traits discontinus sur la figure 3. L'invention permet ainsi d'améliorer la sécurité des personnes proches de la nacelle 1.

Selon un mode de réalisation particulier montré à la figure 3, les dispositifs d'éclairage 21, 22 et 23 comportent un système d'obturation partielle, tel qu'un masque présentant une forme distinctive. Les masques permettent de faire figurer des formes distinctives au sol S dans les marquages M21, M22 et M23. La forme distinctive peut être un symbole, un logo ou du texte. La forme distinctive peut notamment représenter un graphisme de danger M24, tel que représenté sur l'exemple de la figure 3. Ainsi, le système 20 permet de fournir une information plus riche aux personnes proches de la nacelle 1 pour leur permettre d'adopter un comportement approprié. Le masque peut être fixe, ou conçu pour être amovible en fonction de la situation. Selon une variante, seuls certains dispositifs 21, 22 ou 23 sont équipés d'un masque.

Le système d'éclairage 20 peut être paramétré de sorte que lors du démarrage de la nacelle 1, au moins certains des dispositifs 21, 22 et 23 sont automatiquement allumés. En service, chacun des dispositifs 21, 22 et 23 peut être sélectivement allumé ou éteint, au choix de l'opérateur 10. Le système d'éclairage 20 peut également comporter un dispositif de sécurité prévu pour allumer automatiquement tout ou partie des dispositifs d'éclairage 21, 22 et 23 en cas d'urgence.

En outre, au moins certains des dispositifs 21, 22 et 23 peuvent être configurés pour projeter des signaux dynamiques, sous forme d'éclairages lumineux spécifiques, tels que des changements de couleur ou des éclats lumineux intermittents. Ces signaux dynamiques peuvent être activés en cas d'urgence, ou bien en fonction des déplacements de la nacelle 1 ou de ses éléments constitutifs, par exemple lors de la translation du châssis 2 ou de la descente de la plate-forme 5. Ces signaux dynamiques rendent le système d'éclairage 20 encore plus visible, ce qui améliore encore la sécurité des personnes proches de la nacelle 1, ainsi que la sécurité de l'opérateur, notamment en situation d'urgence.

Les dispositifs 21, 22 et 23 peuvent se présenter sous forme de phares classiques, comme c'est le cas des dispositifs 21 sur les figures. Dans ce cas, ces phares ne remplissent néanmoins pas une fonction de phares de conduite classiques. En alternative, les dispositifs 21, 22 et 23 peuvent se présenter chacun sous forme d'un boitier incluant un carter, une vitre, ainsi qu'une ou plusieurs ampoules ou diodes électroluminescentes (LED) agencées dans le carter et projetant des faisceaux lumineux à travers la vitre. De manière avantageuse, les LED ont une durée de vie importante et ne nécessitent pratiquement pas d'entretien.

Pour chaque dispositif 21, 22 et 23, les ampoules ou diodes peuvent être agencées selon un motif particulier. Ainsi, le système d'éclairage 20 présente une signature visuelle particulière, renforçant l'identité visuelle de la nacelle 1.

La nacelle 1 peut comprendre d'autres dispositifs d'éclairage auxiliaires, par exemple pour éclairer la zone d'intervention en hauteur de l'opérateur 10. En alternative, les dispositifs 21, 22 ou 23 peuvent être configurés pour pouvoir orienter leurs faisceaux F21, F22 et F23 afin d'éclairer la zone d'intervention en hauteur.

Sur les figures 7 à 14 sont illustrées différentes conditions C1, C2, C3 et C4 de fonctionnement de la nacelle 1, notamment des situations d'urgence. Les figures 7, 9, 11 et 13 sont des représentations schématiques de différentes situations de travail ou d'urgence. Les figures 8, 10, 12 et 14 sont des représentations schématiques partielles de la nacelle 1 montrée à la figure 6, correspondant respectivement aux situations des figures 7, 9, 11 et 13, avec des faisceaux lumineux FC1, FC2, FC3 et FC4 de couleurs différentes.

Avantageusement, au moins certaines des couleurs utilisées correspondent à des conventions connues du grand public, notamment utilisées sur les tableaux de bord automobiles :
- vert : situation normale,
- orange : disfonctionnement ne nécessitant pas d'arrêt immédiat,
- rouge : danger nécessitant un arrêt immédiat.

Sur la figure 7, l'opérateur 10 est positionné dans le panier 51 de la nacelle 1, en situation de travail ou condition C1. Sur la figure 8, les dispositifs 21 et 22 projettent des faisceaux FC1 de couleur verte. Ainsi, grâce au système 20, les personnes au sol S à proximité de la nacelle 1 peuvent facilement reconnaître qu'une intervention est en cours, et se comporter en conséquence.

Sur la figure 9, la main de l'opérateur 10 s'apprête à appuyer sur un bouton d'arrêt d'urgence 54 équipant la console de commande 52. Le mode d'arrêt de sécurité de la nacelle 1 est alors activé, ce qui correspond à la condition C2. Sur la figure 10, dans ce mode d'arrêt de sécurité, les dispositifs 21 et 22 projettent des faisceaux FC2 de couleur rouge. Ainsi, grâce au système 20, les personnes au sol S à proximité de la nacelle 1 peuvent facilement reconnaître que le mode d'arrêt de sécurité a été activé, et réagir en conséquence. Cela permet au personnel au sol d'observer que l'opérateur de la nacelle élévatrice n'est pas physiquement en danger et que son intervention n'est pas impérativement nécessaire. Le mode d'arrêt de sécurité peut également être activé par d'autres dispositifs de sécurité de la nacelle, notamment un limiteur de charge dans la plateforme ou un limiteur d'inclinaison du châssis. Ces dispositifs de sécurité sont classiques et ne seront donc pas décrits davantage.

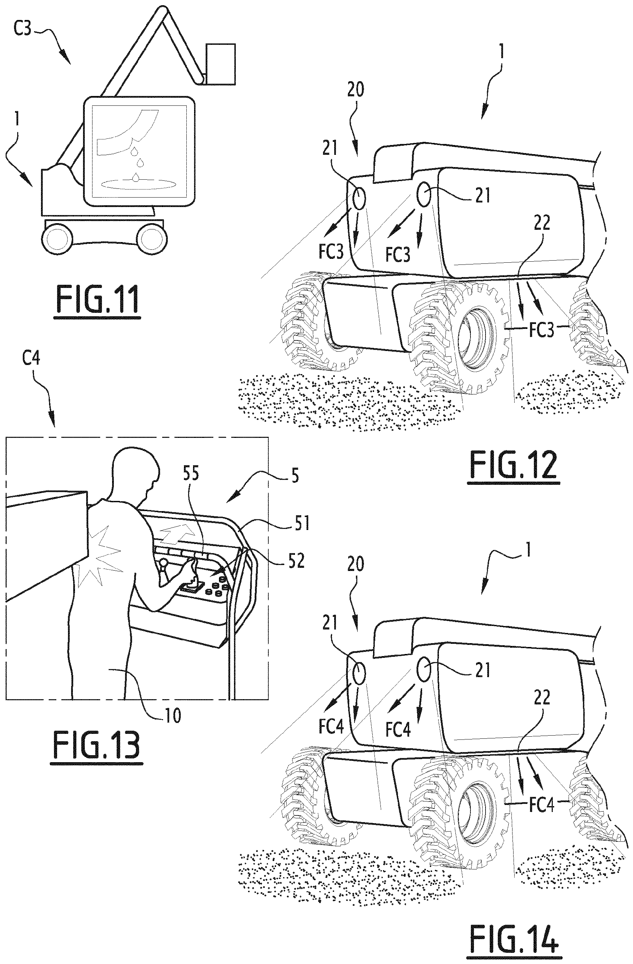

Sur la figure 11, la nacelle 1 est représentée en situation de panne, ou condition C3. Sur la figure 12, les dispositifs 21 et 22 projettent des faisceaux FC3 de couleur orange. Ainsi, grâce au système 20, les personnes au sol S à proximité de la nacelle 1 peuvent facilement reconnaître que la nacelle 1 est en panne, et réagir en conséquence.

Sur la figure 13, l'opérateur 10 est positionné dans le panier 51 de la nacelle 1, lorsqu'un accident survient. En l'espèce, l'opérateur 10 travaillant en hauteur dans le panier 51 heurte accidentellement une poutre lors d'un déplacement de la plate-forme 5. Un système de sécurité, par exemple une barre amovible 55 disposée entre l'opérateur 10 et la console de commande 52, permet alors d'activer un mode accident de la nacelle 1, ou condition C4. Sur la figure 14, les dispositifs 21 et 22 projettent des faisceaux FC4 de couleur bleue. Ainsi, grâce au système 20, les personnes au sol S à proximité de la nacelle 1 peuvent facilement reconnaître que la situation d'accident en hauteur, est potentiellement dangereuse pour l'intégrité physique de l'opérateur et réagir en conséquence en intervenant sur la nacelle élévatrice 1.

Ainsi, dans le cadre de l'invention, au moins l'un des dispositifs d'éclairage 21, 22 et 23 est configuré pour générer des faisceaux lumineux colorés FC1, FC2, FC3, FC4, dont la couleur est fonction des conditions de fonctionnement C1, C2, C3, C4 de la nacelle 1. De préférence, au moins certains des dispositifs 21, 22 et 23, voire tous les dispositifs 21, 22 et 23, sont configurés pour générer des faisceaux lumineux colorés FC1, FC2, FC3 et FC4.

A cet effet, les dispositifs 21, 22 ou 23 comprennent de préférence un ensemble de diodes de couleurs différentes. Différentes couleurs peuvent être projetées par le même dispositif 21, 22 ou 23, avec une couleur distincte pour chaque condition de fonctionnement C1, C2, C3, C4 de la nacelle 1. L'ensemble des dispositifs 21, 22 et 23 projettent une couleur donnée pour une condition de fonctionnement C1, C2, C3, C4 particulière de la nacelle 1.

En comparaison, il est connu d'équiper une machine avec un dispositif d'écran affichant une image, pour signaler aux personnes se trouvant dans l'environnement proche de la machine que celle-ci est sous tension ou que le châssis se déplace.

Sur la figure 15 est représentée une nacelle élévatrice 1 conforme à un deuxième mode de réalisation de l'invention. Les éléments constitutifs similaires au premier mode de réalisation portent les mêmes références numériques. Le dispositif 23 est positionné sur le dessous de la structure élévatrice 4, plus précisément sous le caisson 41, au lieu d'être positionné sur la plate-forme 5. En alternative, le dispositif 23 peut être positionné en un autre emplacement de la structure élévatrice 4.

Par ailleurs, la nacelle élévatrice 1 peut être conformée différemment des figures 1 à 15 sans sortir du cadre de l'invention. En particulier, le système d'éclairage 20 peut présenter toute configuration adaptée à l'application visée. Selon une variante particulière non représentée, les organes de liaison au sol S équipant le châssis roulant 2 peuvent être des chenilles au lieu des roues 7.

En pratique, la nacelle élévatrice 1 peut être une nacelle à bras articulé, une nacelle à bras télescopique, une nacelle à mât vertical, une nacelle ciseaux. Selon sa construction et ses dimensions, la nacelle 1 peut être mise en œuvre pour les travaux de maintenance ou d'élagage, pour les inventaires en entrepôts, pour les chantiers navals, de démolition, de construction ou d'entretien et de finition des ouvrages d'art, etc.

Quel que soit le mode de réalisation, la nacelle 1 comporte une partie basse 2+3 équipée d'organes 7 de liaison au sol S, une structure élévatrice 4, une plate-forme 5 et un système d'éclairage 20 comprenant au moins un dispositif d'éclairage 21, 22 et/ou 23 agencé sur la partie basse 2+3 ou sur la plate-forme 5, autre qu'un phare de conduite. Ce dispositif d'éclairage 21, 22 ou 23 génère sélectivement des faisceaux lumineux colorés FC1, FC2, FC3 ou FC4 dont la couleur est sélectionnée parmi au moins deux couleurs distinctes, en fonction des conditions de fonctionnement C1, C2, C3 ou C4 de la nacelle élévatrice 1 incluant au moins une situation d'arrêt de sécurité C2 et une situation d'accident en hauteur C4 de la nacelle élévatrice 1.

En outre, les caractéristiques techniques des différents modes de réalisation et variantes mentionnés ci-dessus peuvent être, en totalité ou pour certaines d'entre elles, combinées entre elles. Ainsi, la nacelle élévatrice 1 peut être adaptée en termes de coût, de fonctionnalités et de performance.

## Revendications

1. Nacelle élévatrice (1), comprenant :
- une partie basse (2, 3) équipée d'organes (7) de liaison au sol (S) ;
- une structure élévatrice (4) ;
- une plate-forme (5) portée par la structure élévatrice (4) ; et
- un système d'éclairage (20) comprenant au moins un dispositif d'éclairage (21, 22, 23) agencé sur la partie basse (2, 3) ou sur la plate-forme (5), autre qu'un phare de conduite ;
**caractérisée en ce que** le dispositif d'éclairage (21, 22, 23) génère sélectivement des faisceaux lumineux colorés (FC1, FC2, FC3, FC4) dont la couleur est sélectionnée parmi au moins deux couleurs distinctes, correspondant respectivement à :
- une situation d'arrêt de sécurité (C2) de la nacelle élévatrice (1) ;
- une situation d'accident en hauteur (C4) de la nacelle élévatrice (1).

2. Nacelle élévatrice (1) selon la revendication 1, **caractérisée en ce que** le dispositif d'éclairage (21, 22, 23) génère sélectivement :
- un faisceau rouge (FC2) en situation d'arrêt de sécurité (C2) ;
- un faisceau bleu (FC4) en situation d'accident en hauteur (C4).

3. Nacelle élévatrice (1) selon l'une des revendications 1 et 2, **caractérisée en ce que** le dispositif d'éclairage (21, 22, 23) génère également :
- un faisceau vert (FC1) en situation de travail (C1) ;
- un faisceau orange (FC3) en situation de panne (C3).

4. Nacelle élévatrice (1) selon l'une des revendications précédentes, **caractérisée en ce que** le dispositif d'éclairage (21, 22, 23) génère sélectivement des faisceaux lumineux colorés (FC1, FC2, FC3, FC4) dirigés vers le sol (S) et l'environnement proche de la nacelle élévatrice (1), incluant au moins en partie une zone comprise entre 0 et 1 mètre du bord des organes (7) de liaison au sol (S).

5. Nacelle élévatrice (1) selon l'une des revendications précédentes, **caractérisée en ce que** les faisceaux lumineux colorés (FC1, FC2, FC3, FC4) projettent des marquages (M21, M22 ; M21, M22, M23) au sol (S) délimitant une zone balisée (Z20) autour de la nacelle élévatrice (1).

6. Nacelle élévatrice (1) selon la revendication 5, **caractérisée en ce qu'**au moins l'un des marquages (M21, M22 ; M21, M22, M23) au sol (S) comporte une forme figurative (M24), par exemple un graphisme de danger.

7. Nacelle élévatrice (1) selon l'une des revendications précédentes, **caractérisée en ce que** le dispositif d'éclairage (21, 22, 23) génère sélectivement des faisceaux lumineux colorés (FC1, FC2, FC3, FC4) dirigés vers le sol (S) et l'environnement proche de la nacelle élévatrice (1), à moins de dix mètres des organes (7) de liaison au sol (S).

8. Nacelle élévatrice (1) selon l'une des revendications précédentes, **caractérisée en ce que** le dispositif d'éclairage (21, 22, 23) éclaire au moins partiellement les organes (7) de liaison au sol (S).

9. Nacelle élévatrice (1) selon l'une des revendications précédentes, **caractérisée en ce que** le système d'éclairage (20) comprend différents dispositifs d'éclairages (21, 22, 23) agencés sur la partie basse (2, 3), sur la structure élévatrice (4) et/ou sur la plate-forme (5), chacun générant sélectivement des faisceaux lumineux colorés (FC1, FC2, FC3, FC4) dont la couleur est fonction des conditions de fonctionnement (C1, C2, C3, C4) de la nacelle élévatrice (1).

10. Nacelle élévatrice (1) selon la revendication 9, **caractérisée en ce que** le système d'éclairage (20) comprend :
- au moins un dispositif d'éclairage (21) agencé sur un côté avant (11) de la partie basse (2,3), notamment sur un côté avant (11) d'une tourelle (3) appartenant à la partie basse (2, 3) ;
- au moins deux dispositifs d'éclairages (22) agencés sur les côtés latéraux (13 ; 14) de la partie basse (2,3), notamment chacun sur un côté latéral (13 ; 14) et le dessous d'une tourelle (3) appartenant à la partie basse (2, 3) ; et
- au moins un dispositif d'éclairage (23) agencé sur la structure élévatrice (4) ou sur la plate-forme (5).

11. Procédé de mise en œuvre d'une nacelle élévatrice (1) selon l'une des revendications 1 à 10, **caractérisé en ce que** lors d'un changement prédéterminé des conditions de fonctionnement (C1, C2, C3, C4) de la nacelle élévatrice (1), en particulier lors d'un passage en situation de travail (C1), en situation d'arrêt de sécurité (C2), en situation de panne (C3) ou en situation d'accident en hauteur (C4), le dispositif d'éclairage (21, 22, 23) génère sélectivement des faisceaux lumineux colorés (FC1, FC2, FC3, FC4) ayant une couleur prédéterminée.

## Patentansprüche

1. Hubarbeitsbühne (1), umfassend:
- einen unteren Teil (2, 3), der mit Mitteln (7) für die Verbindung mit dem Erdboden (S) versehen ist;
- eine Hebestruktur (4);
- eine von der Hebestruktur (4) getragene Plattform (5); und
- ein Beleuchtungssystem (20), das wenigstens eine Beleuchtungsvorrichtung (21, 22, 23) umfasst, die auf dem unteren Teil (2, 3) oder auf der Plattform (5) vorgesehen ist und eine andere ist als ein Fahrscheinwerfer;
**dadurch gekennzeichnet, dass** die Beleuchtungsvorrichtung (21, 22, 23) selektiv farbige Lichtstrahlen (FC1, FC2, FC3, FC4) erzeugt, deren Farbe ausgewählt ist aus wenigstens zwei verschiedenen Farben, die jeweils entsprechen:
- einer Situation einer Sicherheitsabschaltung (C2) der Hubarbeitsbühne (1);
- einer Situation eines Höhenunfalls (C4) der Hubarbeitsbühne (1).

2. Hubarbeitsbühne (1) nach Anspruch 1, **dadurch gekennzeichnet, dass** die Beleuchtungsvorrichtung (21, 22, 23) selektiv erzeugt:
- einen roten Lichtstrahl (FC2) in der Situation einer Sicherheitsabschaltung (C2);
- einen blauen Lichtstrahl (FC4) in der Situation eines Höhenunfalls (C4).

3. Hubarbeitsbühne (1) nach einem der Ansprüche 1 und 2, **dadurch gekennzeichnet, dass** die Beleuchtungsvorrichtung (21, 22, 23) ferner selektiv erzeugt:
- einen grünen Lichtstrahl (FC1) in der Situation eines Betriebs (C1);
- einen orangen Lichtstrahl (FC3) in der Situation eines Betriebsausfalls (C3).

4. Hubarbeitsbühne (1) nach einem der vorhergehenden Ansprüche, **dadurch gekennzeichnet, dass**
die Beleuchtungsvorrichtung (21, 22, 23) selektiv farbige Lichtstrahlen (FC1, FC2, FC3, FC4) erzeugt, die zum Erdboden (S) und zur näheren Umgebung der Hubarbeitsbühne (1) hin weisen, die wenigstens zum Teil eine Zone zwischen 0 und 1 m vom Rand der Mittel (7) für die Verbindung mit dem Erdboden (S) einschließt.

5. Hubarbeitsbühne (1) nach einem der vorhergehenden Ansprüche, **dadurch gekennzeichnet, dass** die farbigen Lichtstrahlen (FC1, FC2, FC3, FC4) Markierungen (M21, M22; M21, M22, M23) auf den Erdboden (S) projizieren, die eine gekennzeichnete Zone (Z20) um die Hubarbeitsbühne (1) herum begrenzen.

6. Hubarbeitsbühne (1) nach Anspruch 5, **dadurch gekennzeichnet, dass** wenigstens eine der Markierungen (M21, M22; M21, M22, M23) auf dem Erdboden (S) eine figürliche Form (M24) aufweist, zum Beispiel eine Gefahrengrafik.

7. Hubarbeitsbühne (1) nach einem der vorhergehenden Ansprüche, **dadurch gekennzeichnet, dass** die Beleuchtungsvorrichtung (21, 22, 23) selektiv farbige Lichtstrahlen (FC1, FC2, FC3, FC4) erzeugt, die zum Erdboden (S) und zur näheren Umgebung der Hubarbeitsbühne (1) hin weisen, in wenigstens zehn Meter von den Mitteln (7) für die Verbindung mit dem Erdboden (S).

8. Hubarbeitsbühne (1) nach einem der vorhergehenden Ansprüche, **dadurch gekennzeichnet, dass** die Beleuchtungsvorrichtung (21, 22, 23) wenigstens teilweise die Mittel (7) für die Verbindung mit dem Erdboden (S) beleuchtet.

9. Hubarbeitsbühne (1) nach einem der vorhergehenden Ansprüche, **dadurch gekennzeichnet, dass** das Beleuchtungssystem (20) verschiedene Beleuchtungsvorrichtungen (21, 22, 23) umfasst, die auf dem unteren Teil (2, 3), auf der Hebestruktur (4) und/oder auf der Plattform (5) vorgesehen sind, wobei jede selektiv farbige Lichtstrahlen (FC1, FC2, FC3, FC4) erzeugt, deren Farbe von den Betriebsbedingungen (C1, C2, C3, C4) der Hubarbeitsbühne (1) abhängt.

10. Hubarbeitsbühne (1) nach Anspruch 9, **dadurch gekennzeichnet, dass** das Beleuchtungssystem (20) umfasst:
- wenigstens eine Beleuchtungsvorrichtung (21), die auf einer vorderen Fläche (11) des unteren Teils (2, 3) vorgesehen ist, insbesondere auf einer vorderen Seite (11) eines Turms (3), der dem unteren Teil (2, 3) zugehörig ist;
- wenigstens zwei Beleuchtungsvorrichtungen (22), die auf den seitlichen Flächen (13; 14) des unteren Teils (2, 3) vorgesehen sind, insbesondere auf einer seitlichen Fläche (13; 14) und der Unterseite eines Turms (3), der dem unteren Teil (2, 3) zugehörig ist; und
- wenigstens eine Beleuchtungsvorrichtung (23) die auf der Hebestruktur (4) oder auf der Plattform (5) vorgesehen ist.

11. Verfahren für die Verwendung einer Hubarbeitsbühne (1) nach einem der Ansprüche 1 bis 10, **dadurch gekennzeichnet, dass** bei einer vorher bestimmten Änderung der Betriebsbedingungen (C1, C2, C3, C4) der Hubarbeitsbühne (1), insbesondere bei einem Übergang in die Situation eines Betriebs (C1), in die Situation einer Sicherheitsabschaltung (C2), in die Situation eines Betriebsausfalls (C3) oder in die Situation eines Höhenunfalls (C4),
die Beleuchtungsvorrichtung (21, 22, 23) selektiv farbige Lichtstrahlen (FC1, FC2, FC3, FC4) mit einer vorher bestimmten Farbe erzeugt.

## Claims

1. An aerial lift (1), comprising:
- a lower portion (2, 3) equipped with members (7) for connecting to the ground (S);
- a lifting structure (4);
- a platform (5) supported by the lifting structure (4); and
- a lighting system (20) including at least one lighting device (21, 22, 23) arranged on the lower portion (2, 3) or on the platform (5), other than a driving light;
**characterized in that** the lighting device (21, 22, 23) selectively generates colored beams (FC1, FC2, FC3, FC4) of light, the color of which is selected from among at least two different colors, respectively corresponding to:
- an emergency stop situation (C2) of the aerial lift (1);
- an accident at height situation (C4) of the aerial lift (1).

2. The aerial lift (1) according to claim 1, **characterized in that** the lighting device (21, 22, 23) selectively generates:
- a red beam (FC2) in an emergency stop situation (C2);
- a blue beam (FC4) in an accident at height situation (C4).

3. The aerial lift (1) according to one of claims 1 and 2, **characterized in that** the lighting device (21, 22, 23) also generates:
- a green beam (FC1) in a work situation (C1);
- an orange beam (FC3) in an outage situation (C3).

4. The aerial lift (1) according to one of the preceding claims, **characterized in that** the lighting device (21, 22, 23) selectively generates colored light beams (FC1, FC2, FC3, FC4) pointed toward the ground (S) and the environment immediately surrounding the aerial lift (1), at least partly including a zone comprised between 0 and 1 meter of the edge of the members (7) for connecting to the ground (S).

5. The aerial lift (1) according to one of the preceding claims, **characterized in that** colored light beams (FC1, FC2, FC3, FC4) project markings (M21, M22; M21, M22, M23) on the ground (S) defining a flagged zone (Z20) around the aerial lift (1).

6. The aerial lift (1) according to claim 5, **characterized in that** at least one of the markings (M21, M22; M21, M22, M23) on the ground (S) includes a figurative shape (M24), for example a danger symbol.

7. The aerial lift (1) according to one of the preceding claims, **characterized in that** the lighting device (21, 22, 23) selectively generates colored light beams (FC1, FC2, FC3, FC4) pointed toward the ground (S) and the environment immediately surrounding the aerial lift (1), at less than ten meters from the edge of the members (7) for connecting to the ground (S).

8. The aerial lift (1) according to one of the preceding claims, **characterized in that** the lighting device (21, 22, 23) at least partially lights the members (7) for connecting to the ground (S).

9. The aerial lift (1) according to one of the preceding claims, **characterized in that** the lighting system (20) comprises different lighting devices (21, 22, 23) arranged on the lower portion (2, 3), the lift structure (4) and/or the platform (5), each selectively generating beams of colored light (FC1, FC2, FC3, FC4) whose color depends on the operating conditions (C1, C2, C3, C4) of the aerial lift (1).

10. The aerial lift (1) according to claim 9, **characterized in that** the lighting system (20) comprises:
- at least one lighting device (21) arranged on a front side (11) of the lower portion (2, 3), in particular on a front side (11) of a tower (3) belonging to the lower portion (2, 3);
- at least two lighting devices (22) arranged on the lateral sides (13; 14) of the lower portion (2, 3), in particular each on a lateral side (13; 14) and the bottom of a tower (3) belonging to the lower portion (2, 3); and
- at least one lighting device (23) arranged on the lifting structure (4) and/or on the platform (5).

11. A method for implementing an aerial lift (1) according to one of claims 1 to 10, **characterized in that** during a predetermined change in the operating conditions (C1, C2, C3, C4) of the aerial lift (1), in particular during a transition to a working situation (C1), an emergency stop situation (C2), an outage situation (C3) or an accident at height situation (C4), the lighting device (21, 22, 23) selectively generates colored light beams (FC1, FC2, FC3, FC4) having a predetermined color.
